# FASCICULE DE BREVET EUROPEEN

(11) **EP 0 501 581 B1**
(45) Date de publication et mention de la délivrance du brevet: **19.07.1995**
(21) Numéro de dépôt: 92200524.4
(22) Date de dépôt: 24.02.1992
(51) Int. Cl.: E04F 10/06, E04H 15/08, B60P 3/34

(54) **Support de marquise**
Markisenstütze
Support for florentine blinds

(30) Priorité: 01.03.1991 FR 9102530
(43) Date de publication de la demande: 02.09.1992
(73) Titulaire: Brutsaert, Louis Marcel, B-8930 Menen (BE)
(72) Inventeur: Brutsaert, Louis Marcel, B-8930 Menen (BE)
(74) Mandataire: Donné, Eddy

(56) Documents cités:
- FR-A- 2 200 869
- FR-A- 2 303 135
- FR-A- 2 454 776
- GB-A- 3 412
- US-A- 4 198 998

## Description

La présente invention a pour objet un support d'appui pour marquises, stores, tentes, auvents, démontables et articles similaires, formés par un store enroulé, qui déroulé, nécessite au moins un support pour assurer la stabilité de l'article concerné.

La présente invention a plus particulièrement pour objet un support de marquise qui est composé de deux profilés, un profilé mâle s'emboîtant parfaitement dans le deuxième profilé, le profilé femelle, et d'un profilé frontal ou barre de charge de la marquise, de manière à ce que lesdits deux profilés puissent pénétrer complètement dans une gaine prévue à cet effet dans le profilé frontal.

Un support de ce genre est décrit dans US-A-4 198 998. Les profilés mâle et femelle sont bloqués l'un dans l'autre à l'aide d'un bouton à ressort qui traverse des ouvertures correspondantes dans les deux profilés. Après avoir poussé ce bouton à l'encontre du ressort, les profilés peuvent glisser l'un dans l'autre. Ces profilés peuvent être introduits dans la gaine du profilé frontal, où ils sont retenus uniquement par la toile de la marquise après qu'elle ait été enroulée autour du profilé frontal.

Le but de la présente invention est de fournir un support dont la longueur est parfaitement adaptable et facilement réglable tout en lui donnant une forme compacte lorsqu'il n'est pas utilisé, facilitant sa mise en boîte.

Ce but est atteint par le fait qu'au fond du profilé femelle se trouve un ressort à boudin, contre lequel vient s'appuyer le profilé mâle, la gaine étant pourvue à une extrémité d'une paroi, faisant partie du profilé frontal, et derrière laquelle l'ensemble des deux profilés mâle et femelle peut se placer, l'introduction de cet ensemble dans la gaine pouvant avoir lieu en comprimant le ressort, l'ensemble prenant ensuie sa place dans la gaine derrière la paroi sous l'action du ressort.

D'autres caractéristiques et avantages du support suivant l'invention ressortiront de la description d'un mode particulier d'exécution de ce support sans qu'ils soient liés uniquement à ce mode d'exécution.

Cette description est illustrée au moyen des figures annexées dans lesquelles
La figure 1 représente une vue en perspective d'un support suivant l'invention tel qu'il est fixé au profilé frontal ou barre de charge de la marquise au moment où ce support est dégagé de la barre de charge de la marquise.
La figure 2 représente une vue en perspective de l'articulation de fixation du support suivant l'invention à la barre de charge dans une position verticale du support
La figure 3 représente une vue en perspective du profilé femelle du support suivant l'invention.
La figure 4 représente une vue en perspective du profilé mâle du support suivant l'invention.
La figure 5 représente une vue en perspective de la gâchette de verrouillage servant à fixer la position du profilé mâle dans le profilé femelle du support suivant l'invention.

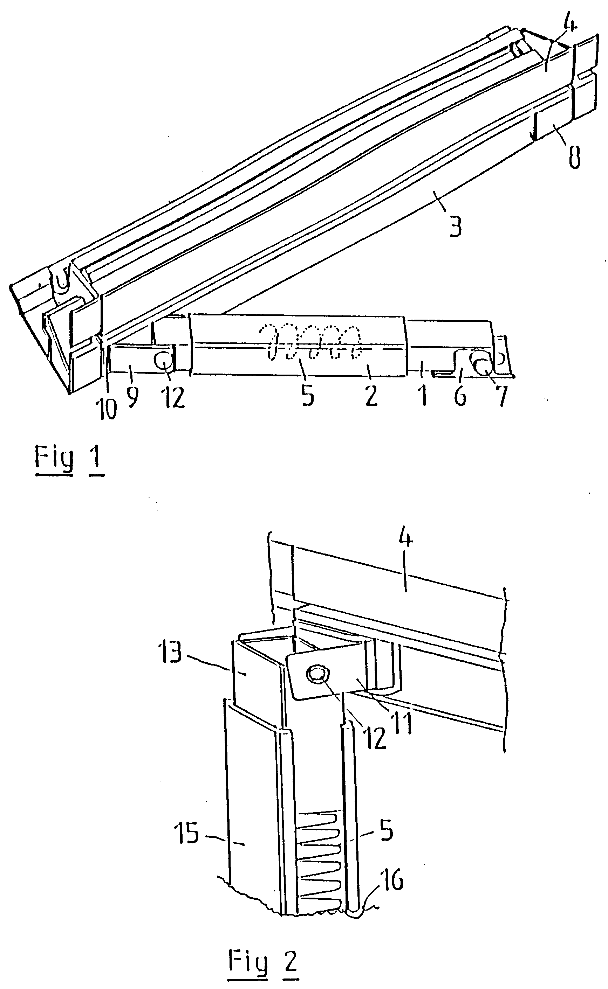

Dans un mode particulier d'exécution du support de marquise suivant l'invention, tel qu'il est représenté dans les figures 1 à 5, ce support comprend deux profilés. dont l'un, un profilé mâle (1), s'emboîte parfaitement dans le deuxième profilé, le profilé femelle (2), de manière à ce qu'il puisse pénétrer complètement dans une gaine (3) prévue à cet effet dans le profilé frontal (4) ou barre de charge.

Au profilé femelle (2) est fixé un ressort (5) à boudin contre lequel vient s'appuyer le profilé mâle (1) muni à l'extrémité opposée d'un arrêt (6) et d'un doigt (7) qui permet de déplacer le profilé mâle (1) à l'encontre du ressort (5) à boudin de manière à introduire le support à l'intérieur de la gaine (3) du profilé frontal (4). Celui-ci comprend une paroi (8) terminale de manière que le profilé mâle (1), une fois dans le support dans la gaîne (3), pénètre derrière cette paroi (8) sous l'action du ressort (5) à boudin jusqu'à ce que l'arrêt (6) vienne buter contre le fond de la gaine (3) à la paroi transversale du profilé frontal (4).

Inversément, pour sortir le support du profilé frontal (4), il suffit d'appuyer au moyen du doigt (7) le profile mâle (1) contre le ressort (5) à boudin du profilé femelle (2), en réduisant la longueur du support jusqu'à ce que celui-ci puisse être dégagé de la gaîne (3) du profilé frontal (4).

Le support suivant l'invention est fixé au profilé frontal (4) au moyen d'une double articulation, par un cardan (9) qui comporte un premier petit axe (10) fixé verticalement au profilé frontal, permettant la rotation du cardan (9) dans un plan horizontal autour de cet axe. (10). En outre le cardan (9) comporte à l'autre extrémité une fourche (11) traversée par un deuxième petit axe (12) qui traverse également un segment tubulaire (13) adhérant au profilé femelle (2) du support suivant l'invention.

Une fois le support dégagé de la gaîne (3) (fig. 1) du profilé frontal (4), de manière suffisante pour dégager la fourche (11) du cardan (9) de la gaine (3), le support peut prendre la position verticale (fig. 2) par rotation du profilé femelle (2) autour du deuxième petit axe (12).

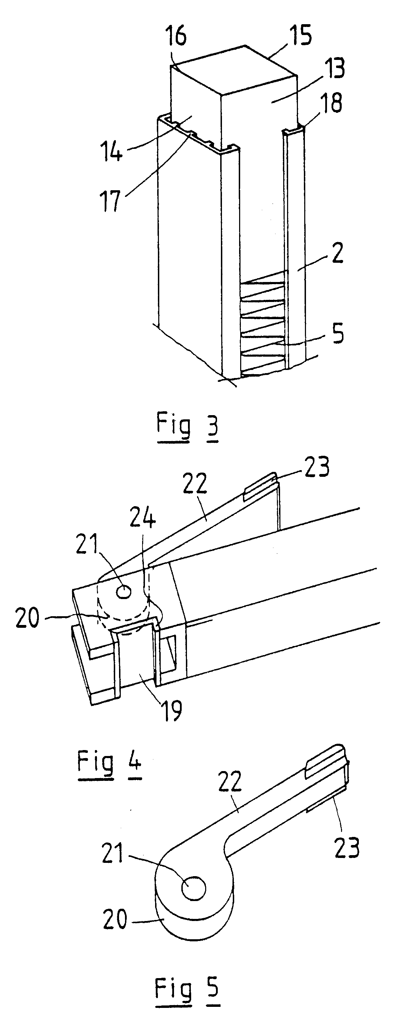

Le profilé femelle (2) a une section en forme de Oméga, (fig. 3) les ailes (14) et (15) étant perpendiculaires à l'âme (16). Du côté du cardan (9) il se termine par un segment tubulaire (13) de section carrée introduit dans le creux du profilé femelle (2) auquel il est fixé. A la partie extérieure de ce segment tubulaire (13) est fixée la fourche (11) du cardan (9) par le petit axe (12) d'articulation, les ailes de cette fourche (11) du cardan ayant une épaisseur limitée afin de ne pas dépasser la dimension du profilé femelle (2) assurant ainsi une uniformité de surface extérieure du profilé frontal (4) de la marquise lorsque le support suivant l'invention est introduit dans la gaine (3) du profilé frontal (4) de la marquise.

A la partie inférieure du segment tubulaire (13) est fixé, à l'intérieur du profilé femelle (2) le ressort (5) à boudin sur lequel vient s'appuyer le profilé mâle (1) lorsque celui-ci est introduit au maximum dans le profilé femelle (2) en réduisant au maximum la longueur du support suivant l'invention.

Les parois intérieures du profilé femelle (2) sont garnies d'arêtes (17) de glissement régulièrement réparties sur les côtés du profilé qui assurent avec les rebords terminaux (18) de la section en Oméga du profilé femelle (2) le guidage du profilé mâle (1) facilitant ainsi le glissement de celui-ci dans le profilé femelle (2).

D'autre part le profilé mâle (1) est pourvu, à son extrémité du côté du ressort (5) à boudin, d'un système de verrouillage en vue de fixer sa position à l'intérieur du profilé femelle (2) en fonction de la longueur requise du support de marquise en position de soutien, ou sol ou à la surface d'appui, du profilé frontal (4) de la marquise.

Ce système de verrouillage dans le mode particulier d'exécution du support de marquise suivant l'invention comprend une cale (19) et un cylindre (20) pouvant tourner autour d'un axe (21), excentré par rapport à l'axe du cylindre (20), sous l'action d'un bras ou gâchette (22).

La cale (19) est formée d'un segment profilé en forme de U dont les ailes (24) sont perpendiculaires à la longueur du profilé mâle (1), la longueur de ce segment profilé étant inférieure à la largeur de ce profilé. Ces ailes (24) de la cale (19) viennent s'appuyer sur la paroi intérieure correspondant à l'âme, du profilé femelle (2) , faisant face à la cale (19) par des ouvertures ou échancrures prévues à cet effet dans le profilé mâle (1), sous la pression exercée par le cylindre (20) par rotation autour de l'axe (21).

Ce cylindre (20) est de préférence en matériau à haute résilience en vue d'assurer le verrouillage du profilé mâle (1) dans le profilé femelle (2) à la distance souhaitée. Ce verrouillage est assuré par la rotation du cylindre (20) en éloignant la gâchette (22) du profilé mâle (1) d'un certain angle, cette gâchette (22) ayant une largeur légèrement inférieure à la distance séparant les deux rebords terminaux (18) de la section en Oméga du profilé femelle (2).

De préférence cette gâchette (22) se termine par une barette transversale (23) légèrement supérieure à cette distance mais inférieure au côté du profilé femelle (2), de manière à faciliter le dégagement de la gâchette (22) de ce profilé femelle (2) en permettant d'exercer ensuite la perssion nécessaire sur cette gâchette (22) qui assure la rotation du cylindre (20) auquel est relié la gâchette (22) en vue de pousser, grâce à l'excentricité de l'axe de rotation (21) par rapport à l'axe du cylindre (20), la cale (19) contre la paroi du profilé femelle (2).

## Revendications

1. Support de marquise qui est composé de deux profilés, un profilé mâle (1) s'emboîtant parfaitement dans le deuxième profilé, le profilé femelle (2), et d'un profilé frontal (4) ou barre de charge de la marquise, de manière à ce que lesdits deux profilés (1,2) puissent pénétrer complètement dans une gaine (3) prévue à cet effet dans le profilé frontal (4), caractérisé en ce qu'au fond du profilé femelle (2) se trouve un ressort (5) à boudin, contre lequel vient s'appuyer le profilé mâle (1), la gaine (3) étant pourvue à une extrémité d'une paroi (8), faisant partie du profilé frontal (4) et derrière laquelle l'ensemble des deux profilés mâle et femelle (1 et 2) peut se placer, l'introduction de cet ensemble dans la gaine (3) pouvant avoir lieu en comprimant le ressort (5), l'ensemble prenant ensuite sa place dans la gaine (3) derrière la paroi (8) sous l'action du ressort (5).

2. Support de marquise suivant la revendication 1, caractérisé en ce que le profilé mâle (1) est muni à son extrémité libre d'un arrêt (6) pourvu d'un doigt (7) en vue d'agir par le profilé mâle (1) sur le ressort (5) à boudin cet arrêt (6) comportant également un rebord venant buter contre le fond de la gaine (3) formé par une paroi transversale du profilé frontal (4).

3. Support de marquise suivant une des revendications 1 ou 2, caractérisé en ce que le profilé femelle (2) comporte à l'extrémité du côté de son attache au profilé frontal (4) de la marquise un segment tubulaire (13) traversé par un axe de rotation (12) qui traverse également la fourche (11) dont est muni le cardan (9) de fixation du support de marquise au profilé frontal, ce segment tubulaire (13) ayant une section légèrement inférieure à celle du profilé femelle (2), de manière à ce qu'avec l'épaisseur des deux bras de la fourche (11) la section occupée dans la gaine (3) par le segment tubulaire (13) et la fourche (11) soit plus ou moins égale à la section du profilé femelle (2) proprement dit.

4. Support de marquise suivant une des revendications 1,2 ou 3 en ce que le profilé femelle (2) a une section en forme de Oméga, les ailes (14) et (15) étant perpendiculaires à l'âme (16) et se terminant par un rebord (18) en vue de favoriser le guidage du profilé mâle àl'intérieur du profilé femelle (2).

5. Support de marquise suivant la revendication 4 caractérisé en ce que les parois intérieures du profilé femelle (2) sont garnies d'arêtes (17) facilitant le glissement du profilé mâle dans le profilé femelle (2).

6. Support de marquise suivant une des revendications 1, 2, 3, ou 4, caractérisé en ce que le profilé mâle (1) est muni à son extrémité du côté du ressort (5) à boudin d'un système de verrouillage en vue de fixer sa position à l'intérieur du profilé femelle (2).

7. Support de marquise suivant la revendication 6 caractérisé en ce que le système de verrouillage fixé au profilé mâle (1) comprend une cale (19) et un cylindre (20) pouvant tourner autour d'un axe (21), excentré par rapport à l'axe du cylindre (20), sous l'action d'un bras ou gâchette (22).

8. Support de marquise suivant la revendication 7 caractérisé en ce que la cale (19) est formée d'un segment profilé en forme de U dont les ailes (24), sont perpendiculaires à la longueur du profilé mâle (1), et viennent s'appuyer sur la paroi intérieure du profilé femelle (2) faisant face à la cale (19) en traversant des ouvertures ou échancrures prévues à cet effet dans le profilé mâle (1) sous la pression exercée par le cylindre (20) sur l'âme de la cale (19) par rotation autour de l'axe (21).

9. Support de marquise suivant la revendication 7 ou 8 caractérisé en ce que la gâchette (22) qui actionne le cylindre (20) du système de verrouillage fixé au profilé mâle (1) soit situé de manière à pouvoir sortir du profilé femelle (2) par l'ouverture prévue à cet effet dans ce profilé femelle (2), profilé de préférence en forme de Oméga.

10. Support de marquise suivant la revendication 9 caractérisé en ce que la gâchette (22) comporte à une extrémité libre une barette transversale (23) dont la longueur est supérieure à l'ouverture du profilé femelle (2).

## Claims

1. Canopy support composed of two sections, i.e. a male section (1) which fits perfectly in the second section, the female section (2), and of a frontal section (4) or suspension bar of the canopy, such that said two sections (1,2) can penetrate entirely in a sleeve (3) provided to this end in the frontal section (4), characterized in that at the back of the female section (2) is situated a coil spring (5) against which the male section (1) rests, whereby the sleeve (3) is provided with a wall (8) at one end, which is part of the frontal section (4) and behind which the whole of the two male and female sections (1 and 2) can be placed, whereby said whole can be introduced in the sleeve (3) by compressing the spring (5), after which the whole is put in position in the sleeve (3) behind the wall (8) due to the action of the spring (5).

2. Canopy support according to claim 1, characterized in that the male section (1) is provided at its free end with a stop (6) equipped with a finger (7) in order to act upon the coil spring (5) by means of the male section (1), whereby this stop (6) also has an edge which knocks against the back of the sleeve (3) consisting of a partition wall of the frontal section (4).

3. Canopy support according to any of claims 1 or 2, characterized in that the female section (2) contains at the end of the side at which it is fastened to the frontal section (4) of the canopy a tubular segment (13) crossed by a rotation shaft (12) which also goes through the fork (11) with which the fastening joint (9) of the canopy support is equipped at the frontal section, whereby the sectional plane of said tubular segment (13) is somewhat smaller than that of the female section (2), such that, with the thickness of the two arms of the fork (11), the sectional plane occupied in the sleeve (3) by the tubular segment (13) and the fork (11) is more or less equal to the sectional plane of the female section (2) as such.

4. Canopy support according to any of claims 1, 2 or 3, characterized in that the female section (2) has a sectional plane in the shape of an omega, whereby the wings (14) and (15) are perpendicular to the web (16) and end up in an edge (18) in order to promote the guiding of the male section inside the female section (2).

5. Canopy support according to claim 4, characterized in that the inner walls of the female section (2) are provided with cants (17) which promote the sliding of the male section into the female section (2).

6. Canopy support according to any of claims 1, 2, 3 or 4, characterized in that the male section (1) is equipped at its end on the side of the coil spring (5) with a lock system in order to fix its position inside the female section (2).

7. Canopy support according to claim 6, characterized in that the lock system, which is fixed to the male section (1), contains a wedge (19) and a cylinder (20) which can turn around a shaft (21), eccentric in relation to the shaft of the cylinder (20), through the action of an arm or follower (22).

8. Canopy support according to claim 7, characterized in that the wedge (19) consists of a profiled, U-shaped segment whose wings (24) are perpendicular to the length of the male section (1) and rest against the inner wall of the female section (2) facing the wedge (19) as they go through openings or notches provided to this end in the male section (1) under the pressure exerted by the cylinder (20) on the web of the wedge (19) through the rotation around the shaft (21).

9. Canopy support according to claim 7 or 8, characterized in that the follower (22) which acts upon the cylinder (20) of the lock system fixed to the male profile (1) is situated such that it can come out of the female section (2) through the opening provided to this end in the female section (2), whereby said section preferably has the shape of an omega.

10. Canopy support according to claim 9, characterized in that the follower (22) contains at one free end a cross bar (23) whose length is greater than the opening of the female section (2).

## Patentansprüche

1. Markisenstütze welche besteht aus zwei Proilen, einem Einsteckprofil (1), das genau in ein zweites, offenes Profil (2) hineinpaßt, sowie aus einem Vorderprofil (4) oder einer Tragestange der Markise, so daß die beiden besagten Profile (1, 2) vollständig in eine Hülle (3) geschoben werden können, die zu diesem Zweck im Vorderprofil (4) vorgesehen ist, wobei unten im offenen Profil (2) eine Sprungfeder (5) angebracht ist, auf der das Einsteckprofil (1) aufliegt und die Hülle (3) an einem Ende eine Wand (8) aufweist, die Bestandteil des Vorderprofils (4) ist und hinter der das Einsteckprofil und das offene Profil (1 und 2) zusammen untergebracht werden können; hierbei läßt sich dies alles in die Hülle (3) stecken, indem die Feder (5) zusammengedrückt wird, so daß das Ganze hinter der Wand (8) durch die Kraft der Feder (5) in der Hülle (3) Platz findet.

2. Markisenstütze nach Anspruch 1, dadurch gekennzeichnet, daß das Einsteckprofil (1) am freien Ende einen Stopper (6) mit einem Stift (7) aufweist, um hiermit über das Einsteckprofil (1) auf die Sprungfeder (5) einzuwirken, wobei dieser Stopper (6) ebenfalls einen Rand aufweist, der gegen den an einer Querwand des Vorderprofils (4) bestehenden Boden der Hülle (3) stößt.

3. Markisenstütze nach einem der Ansprüche 1 oder 2, dadurch gekennzeichnet, daß das offene Profil (2) am Ende auf der Seite der Befestigung am Vorderprofil (4) der Markise ein rohrförmiges Segment (13) aufweist, durch das eine Drehachse (12) führt, die ebenfalls durch die Gabel (11) an der Welle (9) zur Befestigung der Markisenstütze am Vorderprofil geführt ist, wobei dieses rohrförmige Segment (13) einen geringfügig niedrigeren Querschnitt aufweist als das offene Profil (2), so daß der Querschnitt, den das rohrförmige Segment (13) und die Gabel (11) mit der Dicke der beiden Gabelflügel (11) innerhalb der Hülle (3) einnimmt, mehr oder weniger dem Querschnit des eigentlichen offenen Profils (2) entspricht.

4. Markisenstütze nach einem der Ansprüche 1, 2 oder 3, wobei das offene Profil (2) einen Omega-förmigen Querschnitt aufweist und die Flügel (14) und (15) senkrecht zum Kern (16) stehen und in einem Rand (18) enden, um auf diese Weise die Führung des Einsteckprofils innerhalb des offenen Profils (2) zu begünstigen.

5. Markisenstütze nach Anspruch 4, dadurch gekennzeichnet, daß die Innenwände des offenen Profils (2) mit Rippen (17) versehen sind, die das Gleiten des Einsteckprofils im offenen Profil (2) erleichtern.

6. Markisenstütze nach einem der Ansprüche 1, 2, 3 oder 4, dadurch gekennzeichnet, daß das Einsteckprofil (1) am Ende auf der Seite der Sprungfeder (5) ein Verriegelungssystem aufweist, um seine Position innerhalb des offenen Profils (2) zu fixieren.

7. Markisenstütze nach Anspruch 6, dadurch gekennzeichnet, daß das am Einsteckprofil befestigte Verriegelungssystem eine Blechunterlage (19) und einen Zylinder (20) aufweist, der um eine Achse (21) drehen kann, die exzentrisch im Verhältnis zur Zylinderachse (20) angeordnet ist, und zwar unter Einwirkung eines Arms oder Drückers (22).

8. Markisenstütze nach Anspruch 7, dadurch gekennzeichnet, daß die Blechunterlage (19) aus einem U-förmigen Profilsegement besteht, dessen Flügel (24) senkrecht zur Längsrichtung des Einsteckprofils stehen und auf der Innenwand des offenen Profils (2) gegenüber der Blechunterlage (19) auf liegen, indem sie durch Öffnungen oder Einkerbungen führen, die zu diesem Zweck im Einsteckorofil vorgesehen sind, und zwar durch den vom Zylinder (20) auf den Kern der Blechunterlage (19) bei Drehung um die Achse (21) ausgeübten Druck.

9. Markisenstütze nach Anspruch 7 oder 8, dadurch gekennzeichnet, daß der Drücker (22) zur Betätigung des Zylinders (20) des am Einsteckprofil (1) befestigten Verriegelungssystems so angeordnet ist, daß es durch die zu diesem Zweck im offenen Profil (2) vorgesehene Öffnung aus diesem offenen Profil (2) herauskommen kann, wobei das Profil vorzugsweise eine Omega-Form aufweist.

10. Markisenstütze nach Anspruch 9, dadurch gekennzeichnet, daß der Drücker (22) an einem freien Ende einen kleinen Querbügel (23) aufweist, dessen Länge größer ist als die Öffnung des offenen Profils (2).
